# EUROPÄISCHE PATENTSCHRIFT

(11) **EP 2 963 190 B1**
(45) Veröffentlichungstag und Bekanntmachung des Hinweises auf die Patenterteilung: **18.04.2018**
(21) Anmeldenummer: 14175325.1
(22) Anmeldetag: 01.07.2014
(51) Int. Cl.: E02F 9/12, B66C 23/84, E02D 17/13, E21C 29/26, F16D 55/225, E21B 7/02

(54) **Dreh- und Schwenkvorrichtung für eine Baumaschine**
Pivoting brake for a construction machine
Frein à pivotement pour un engin de travail

(43) Veröffentlichungstag der Anmeldung: 06.01.2016
(73) Patentinhaber: Morath GmbH, 79774 Albbruck (DE)
(72) Erfinder: Morath, Daniel, 79774 Albbruck (DE); Morath, Wolfgang, 79774 Albbruck (DE)
(74) Vertreter: Westphal, Mussgnug & Partner Patentanwälte mbB

(56) Entgegenhaltungen:
- JP-A- H0 674 751
- JP-A- S5 824 627
- JP-A- H10 237 901
- JP-A- 2005 282 833
- JP-A- 2013 213 513
- JP-A- 2014 109 151
- JP-U- H0 423 837
- JP-U- H02 112 750
- US-A- 4 680 929

## Beschreibung

Die vorliegende Erfindung betrifft eine Dreh- und Schwenkvorrichtung für eine Baumaschine, insbesondere für einen Bagger oder eine Bohrraupe, mit einem Oberwagen und einem Unterwagen, wobei die Dreh- und Schwenkvorrichtung eine Drehlagerungseinrichtung zum drehbaren Lagern des Oberwagens auf dem Unterwagen und eine Antriebseinrichtung zum wahlweisen Drehen des Oberwagens um eine Drehachse relativ zum Unterwagen umfasst, wobei die Antriebseinrichtung eine interne Bremse aufweist. Weiterhin betrifft die Erfindung eine entsprechende Baumaschine.

Dreh- und Schwenkvorrichtungen stellen alle Baueinheiten bereit, die es ermöglichen, einen Oberwagen drehbar auf einem Unterwagen zu lagern und zu drehen und werden vielfach auch dazu verwendet, Versorgungs- und Steuerungsleitungen vom Unterwagen in den Oberwagen und umgekehrt zu führen. In diesem Fall wird die Dreh- und Schwenkvorrichtung häufig auch als Drehdurchführung bezeichnet. Hauptanwendungsgebiete derartiger Dreh- und Schwenkvorrichtungen sind Bagger und Bohrraupen, die beispielsweise in der DE 42 19 803 A1 oder der DE 200 20 953 U1 offenbart sind, allerdings werden Dreh- und Schwenkvorrichtungen unter anderem auch für Mobilkräne (vgl. DE 20 2012 009 418 U1), Panzer und Gefechtstürme von Kriegsschiffen verwendet. Die Dreh- und Schwenkvorrichtungen ermöglichen es, einen Ausleger oder ein Kanonenrohr schnell in die gewünschte Drehstellung zu bringen, ohne die gesamte Einheit drehen zu müssen.

Die Antriebseinrichtung weist in den meisten Fällen eine interne Bremse auf, die beispielsweise hydraulisch, elektrisch oder mechanisch wirkt und eine Haltekraft aufbringt, mit welcher der Oberwagen in der gewünschten Drehstellung gehalten wird. Da bei den meisten Anwendungen die auf den Oberwagen wirkenden Drehmomente relativ gering sind, wird durch die interne Bremse sichergestellt, dass der Oberwagen in der gewünschten Drehstellung gehalten wird. Insbesondere bei Baggern und Bohrraupen gibt es aber Anwendungen, bei denen beispielsweise ein Bohrer mittels einer Bohrlafette in etwa senkrecht zur Längsachse des am Oberwagen befestigten Auslegers angeordnet wird, um ein in etwa parallel zur Bodenoberfläche verlaufendes Loch in den Untergrund bohren zu können. Aufgrund des deutlichen Abstands zwischen dem Bohrer und der Drehachse, der oft mehrere Meter betragen kann, erzeugen die beim Bohrvorgang auftretenden Kräfte ein hohes Drehmoment, das den Oberwagen drehen will. Um den Bohrvorgang sicher durchführen zu können, muss die Bohrlafette und folglich der Oberwagen in einer bestimmten Stellung gehalten werden, wozu die Dreh- und Schwenkvorrichtung ein dem auf den Oberwagen wirkenden Drehmoment entgegengesetztes Haltemoment übertragen muss, was insbesondere dann stark ansteigen kann, wenn der Untergrund harte Gesteinsschichten aufweist. Dies gilt nicht nur für den Bohrvorgang selbst, sondern auch für den Rückzug des Bohrers aus dem Untergrund. Die interne Bremse der Antriebseinrichtung reicht dann aber häufig nicht aus, um den Oberwagen in der gewünschten Stellung zu halten. Ab einem bestimmten Drehmoment "rutscht" der Oberwagen durch, wodurch der Bohrwinkel verändert wird und es zu einem Verklemmen oder einer Beschädigung des Bohrers kommen kann. Die von der internen Bremse aufgebrachte Haltekraft kann aber nur mit einem relativ hohen konstruktiven Aufwand erhöht werden. Ein Hydromotor mit einer internen Bremse ist aus der DE 10 2004 010 300 A1 bekannt.

In vielen Fällen umfasst die Antriebseinrichtung ein Ritzel, das mit einem Zahnkranz, häufig auch Drehkranz genannt, zusammenwirkt, um den Oberwagen relativ zum Unterwagen zu drehen. In diesem Fall ist der Erhöhung der von der internen Bremse aufbringbaren Haltekraft noch engere Grenzen gesetzt, da ab einem bestimmten Haltemoment die Festigkeitsgrenze des Ritzels und des Zahnkranzes überschritten wird, wodurch die Zähne der Verzahnung plastisch verformt werden oder sogar abbrechen können und der Oberwagen nicht mehr gegenüber dem Unterwagen gedreht werden kann. Der Austausch des Ritzels und des Zahnkranzes ist mit erheblichen Kosten und einem hohen zeitlichen Aufwand verbunden. Die US 4 680 929 und die JP 2013 213513 A offenbaren eine Dreh- und Schwenkvorrichtung für einen Bagger.

Aufgabe der vorliegenden Erfindung ist es daher, eine Dreh- und Schwenkvorrichtung anzugeben, die auch dann die sichere Positionierung des Oberwagens in der gewünschten Drehstellung relativ zum Unterwagen sicherstellt, wenn hohe Drehmomente auf den Oberwagen wirken. Insbesondere soll ein unkontrolliertes "Durchrutschen" des Oberwagens verhindert werden.

Gelöst wird die Aufgabe mit einer Dreh- und Schwenkvorrichtung nach Anspruch 1. Weitere vorteilhafte Ausgestaltungen der erfindungsgemäßen Dreh- und Schwenkvorrichtung sind Gegenstand der Unteransprüche.

Erfindungsgemäß weist die Dreh- und Schwenkvorrichtung eine Fixiereinrichtung zum Fixieren des Oberwagens in einer wählbaren Drehstellung relativ zum Unterwagen auf. Die Fixiereinrichtung stellt neben der internen Bremse der Antriebseinrichtung einen weiteren Kraftfluss zwischen dem Oberwagen und dem Unterwagen bereit, wodurch ein zusätzliches Haltemoment zum Fixieren des Oberwagens in der gewünschten Drehstellung bereitgestellt werden kann. Die Fixiereinrichtung kann auf konstruktiv einfache Weise auf die zu erwartenden Haltemomente ausgelegt werden, so dass die Auslegung der internen Bremse der Antriebseinheit nicht geändert werden muss. Das Haltemoment kann prinzipiell beliebig weit erhöht werden. Ein unkontrolliertes Durchrutschen des Oberwagens wird selbst bei hohen Drehmomenten verhindert. Für den Fall, dass die Antriebseinrichtung ein Ritzel umfasst, das mit einem Zahnkranz zusammenwirkt, fließt nur ein geringer Teil der Haltekraft und des Haltemoments über das Ritzel und den Zahnkranz. Die Festigkeitsgrenze der Verzahnungen des Ritzels und des Zahnkranzes wird wegen des weiteren Kraftflusses über die Fixiereinrichtung nicht erreicht, so dass das Ritzel und der Zahnkranz selbst bei hohen Drehmomenten nicht beschädigt werden.

In der erfindungsgemäßen Dreh- und Schwenkvorrichtung umfasst die Fixiereinrichtung eine oder mehrere Bremsscheiben und eine oder mehrere mit der Bremsscheibe zusammenwirkende und wahlweise betätigbare Bremseinheiten, wobei die Fixiereinrichtung neben der internen Bremse (52) der Antriebseinrichtung einen weiteren Kraftfluss zwischen dem Oberwagen und dem Unterwagen bereitstellt. In diesem Fall kann die Fixiereinrichtung auch als Schwenkbremse bezeichnet werden. Bremsscheiben und mit ihnen zusammenwirkende Bremseinheiten sind vielfältig eingesetzte Maschinenelemente, die sich eignen, wahlweise die Übertragung von hohen Kräften und Drehmomenten zwischen einem stehenden und einem bewegbaren Bauteil sicherzustellen. Da viel Erfahrung mit der Dimensionierung und Herstellung dieser Maschinenelemente zur Verfügung steht, hält sich der zusätzliche konstruktive Aufwand in engen Grenzen. Dabei kann die Bremsscheibe drehfest mit dem Oberwagen verbunden und die Bremseinheit fest am Unterwagen angeordnet sein. Alternativ kann die Bremsscheibe drehfest mit dem Unterwagen verbunden und die Bremseinheit fest am Oberwagen angeordnet werden. Je nach vorhandenem Raumangebot im Ober- und Unterwagen kann die eine oder andere Anordnung bevorzugt verwendet werden. Wie eingangs erwähnt, werden die Dreh- und Schwenkvorrichtungen häufig auch zum Durchführen von Versorgungs- und Steuerungsleitungen vom Unterwagen in den Oberwagen verwendet. Je nach Verlauf der Leitungen bietet sich eine der Anordnungen mehr an als die andere. Die erfindungsgemäße Fixiereinrichtung kann somit flexibel eingesetzt werden, so dass keine oder nur wenige Änderungen an bereits vorhandenen Konstruktionen von Ober-und Unterwagen vorgenommen werden müssen. Die Bremsscheiben und die Bremseinheiten können so ausgestaltet sein, dass eine Nachrüstung von bestehenden Dreh- und Schwenkvorrichtungen bzw. der betreffenden Baumaschinen möglich ist.

In einer besonders bevorzugten Ausgestaltung umfasst die Bremseinheit eine Anzahl von Bremsbacken, die mit einer Vorspanneinrichtung vorspannbar ist, so dass die Bremsbacken zum Fixieren des Oberwagens relativ zum Unterwagen mit der Bremsscheibe zusammenwirken, wobei die Bremsbacken zum Drehen des Oberwagens relativ zum Unterwagen lösbar sind, so dass sie die Bremsscheibe freigeben. Die Vorspanneinrichtung kann dabei Federn umfassen, die so ausgestaltet sind, dass die Bremsbacken solange mit der Bremsscheibe zusammenwirken, bis dass die Bremsbacken aktiv gelöst werden und die Bremsscheibe freigeben. Diese Ausgestaltung hat den Vorteil, dass der Oberwagen auch dann in seiner Drehstellung relativ zum Unterwagen positioniert ist, wenn die Energieversorgung der Baumaschine ausfallen sollte. Plötzliche und unkontrollierte Drehbewegungen des Oberwagens infolge des Ausfalls der Energieversorgung sind folglich ausgeschlossen.

Alternativ umfasst die Bremseinheit eine Anzahl von Bremsbacken, die wahlweise zum Fixieren des Oberwagens relativ zum Unterwagen betätigbar ist, so dass die Bremsbacken mit der Bremsscheibe zusammenwirken. In dieser Ausgestaltung müssen die Bremsbacken aktiv wie bei einer Autobremse betätigt werden, damit der Oberwagen relativ zum Unterwagen sicher positioniert ist. Diese Ausgestaltung bietet sich dann an, wenn relativ selten hohe Drehmomente auf den Oberwagen wirken, so dass die Bremsbacken nicht ohne Grund betätigt und gelöst werden. Hierdurch kann die Anzahl der Betätigungen verringert werden, wodurch die entsprechenden Bauteile weniger stark belastet werden. Zudem kann die Baumaschine so betrieben werden, als ob keine erfindungsgemäße Fixiereinrichtung vorhanden wäre, wodurch dem Baumaschinenfahrer der gewohnte Bedienkomfort bereitgestellt wird.

Vorzugsweise sind die Bremsbacken hydraulisch, pneumatisch, elektrisch oder mechanisch betätigbar oder lösbar. Bei Baumaschinen werden sehr häufig hydraulische Systeme verwendet, so dass entsprechende Ölpumpen und Ölkreisläufe vorhanden sind, die auch für die Betätigung und das Lösen der Bremsbacken verwendet werden können, so dass der zusätzliche konstruktive Aufwand zum Realisieren der erfindungsgemäßen Dreh- und Schwenkvorrichtung gering gehalten werden kann. Die Verwendung von den übrigen genannten Betätigungsarten ist genauso gut möglich. Beispielsweise können die Bremsbacken mittels eines Seilzugs mit einem Hebel verbunden sein, so dass der Baumaschinenführer durch Ziehen eines Hebels die Bremsbacken mechanisch lösen kann.

In einer praktischen Ausgestaltung weist die Dreh- und Schwenkvorrichtung einen konzentrisch um die Drehachse angeordneten Durchführungsdom zum Durchführen von Versorgungs- und Steuerungsleitungen vom Unterwagen zum Oberwagen auf, wobei die Bremsscheibe drehfest mit einem den Durchführungsdom zumindest teilweise umschließenden Befestigungsabschnitt verbindbar ist. Wie eingangs erwähnt, werden die Dreh- und Schwenkvorrichtungen häufig auch zum Durchführen von Versorgungs- und Steuerungsleitungen verwendet. Hierzu bieten sich konzentrisch um die Drehachse angeordnete Durchführungsdome an, da sie nur reine Rotationsbewegungen, aber keine oder zumindest keine nennenswerten translatorischen Bewegungen beim Drehen des Oberwagens durchführen. Die Versorgungs- und Steuerungsleitungen können auf konstruktiv einfache Weise vom Unterwagen in den Oberwagen und umgekehrt geführt werden. Das Anordnen des Befestigungsabschnitts um den Durchführungsdom ist einerseits raumsparend, so dass die Dreh- und Schwenkvorrichtung sehr kompakt ausgestaltet werden kann. Andererseits trägt diese Ausführungsform dem Umstand Rechnung, dass Durchführungsdome in den betreffenden Baumaschinen häufig zu finden sind, so dass ein Nachrüsten mit der erfindungsgemäßen Fixiereinrichtung auch in diesem Fall möglich ist.

In einer weiteren vorteilhaften Ausgestaltung, in welcher die Drehlagerungseinrichtung ein Wälzlager mit einem Außenring und einem Innenring umfasst, ist die Bremsscheibe drehfest mit dem Außenring oder dem Innenring verbindbar. In dieser Ausgestaltung sind keine weiteren Bauteile zum Befestigen der Bremsscheibe in der erfindungsgemäßen Dreh- und Schwenkvorrichtung notwendig, so dass sich die Komplexität der Dreh- und Schwenkvorrichtung und der Montageaufwand begrenzen lassen. Vorzugsweise umfasst die Antriebseinrichtung einen Antriebsmotor, der ein Ritzel wahlweise antreibt, wobei das Ritzel mit einem Zahnkranz zum Drehen des Oberwagens relativ zum Unterwagen zusammenwirkt. Diese mechanische Art der Übertragung der Drehbewegung ist weit verbreitet und sehr zuverlässig, weshalb sie das Mittel der Wahl darstellt. Mithilfe der erfindungsgemäßen Dreh- und Schwenkvorrichtung werden Ritzel und Zahnrad vor Beschädigungen infolge von hohen Drehmomenten geschützt. Hydraulische Arten der Übertragung der Drehbewegung sind ebenfalls denkbar (vgl. DE 10 2004 010 300 A1), sind aber im Allgemeinen konstruktiv aufwendiger.

Ein weiterer Aspekt der vorliegenden Erfindung betrifft eine Baumaschine, insbesondere einen Bagger oder eine Bohrraupe, mit einem Unterwagen und einem Oberwagen, umfassend eine Dreh- und Schwenkvorrichtung nach einem der zuvor diskutierten Ausführungsbeispiele zum drehbaren Lagern und zum wahlweisen Drehen des Oberwagens relativ zum Unterwagens sowie zum Fixieren des Oberwagens in einer wählbaren Drehstellung relativ zum Unterwagen. Die Vorteile und technischen Effekte, die mit der erfindungsgemäßen Baumaschine erreicht werden, entsprechen denjenigen, die für die erfindungsgemäße Dreh- und Schwenkvorrichtung genannt worden sind. An dieser Stelle sei darauf hingewiesen, dass es durch die Fixiereinrichtung ermöglicht wird, hohe Haltemomente zwischen dem Unter- und dem Oberwagen zu übertragen, ohne dass die Auslegung der internen Bremse der Antriebseinrichtung ändern zu müssen. Für den Fall, dass die Antriebseinrichtung ein Ritzel und einen Zahnkranz aufweist, werden übermäßige Beanspruchungen und hieraus resultierende Beschädigungen der betreffenden Verzahnungen verhindert.

Ein weiterer nicht zur Erfindung gehöriger Aspekt betrifft ein Verfahren zum Fixieren eines Oberwagens in einer wählbaren Drehstellung relativ zu einem Unterwagen einer Baumaschine nach dem zuvor diskutierten Ausführungsbeispiel, wobei die Baumaschine eine Dreh- und Schwenkvorrichtung mit einer Fixiereinrichtung aufweist und die Fixiereinrichtung eine oder mehrere Bremsscheiben und eine oder mehrere mit der Bremsscheibe zusammenwirkende und wahlweise betätigbare Bremseinheiten mit einer Anzahl von Bremsbacken umfasst, umfassend folgende Schritte:
- Vorspannen der Bremsbacken mittels einer Vorspanneinrichtung derart, dass die Bremsbacken zum Fixieren des Oberwagens relativ zum Unterwagen mit der Bremsscheibe zusammenwirken,
- Lösen der Bremsbacken auf hydraulische, pneumatische, elektrische oder mechanische Weise derart, dass die Bremsbacken die Bremsscheibe zum Drehen des Oberwagens relativ zum Unterwagen freigeben,
- Drehen des Oberwagens relativ zum Unterwagen mittels einer Antriebseinrichtung, während die Bremsbacken gelöst sind, und
- erneutes Vorspannen der Bremsbacken mittels der Vorspanneinrichtung derart, dass der Oberwagen in der gewünschten Drehstellung fixiert wird.

Die Vorspanneinrichtung kann dabei Federn umfassen, die so ausgestaltet sind, dass die Bremsbacken solange mit der Bremsscheibe zusammenwirken, bis dass die Bremsbacken aktiv gelöst werden und die Bremsscheibe freigeben. Diese Ausgestaltung hat den Vorteil, dass der Oberwagen auch dann in seiner Drehstellung relativ zum Unterwagen positioniert ist, wenn die Energieversorgung der Baumaschine ausfallen sollte. Plötzliche und unkontrollierte Drehbewegungen des Oberwagens infolge des Ausfalls der Energieversorgung sind folglich ausgeschlossen.

Ein weiterer nicht zur Erfindung gehöriger Aspekt betrifft ein Verfahren zum Fixieren eines Oberwagens in einer wählbaren Drehstellung relativ zu einem Unterwagen einer Baumaschine nach dem zuvor diskutierten Ausführungsbeispiel, wobei die Baumaschine eine Dreh- und Schwenkvorrichtung mit einer Fixiereinrichtung aufweist und die Fixiereinrichtung eine oder mehrere Bremsscheiben und eine oder mehrere mit der Bremsscheibe zusammenwirkende und wahlweise betätigbare Bremseinheiten mit einer Anzahl von Bremsbacken umfasst, umfassend folgende Schritte:
- Betätigen der Bremsbacken auf hydraulische, pneumatische, elektrische oder mechanische Weise derart, dass die Bremsbacken mit der Bremsscheibe wahlweise zum Fixieren des Oberwagens relativ zum Unterwagen zusammenwirken,
- Lösen der Bremsbacken derart, dass die Bremsbacken die Bremsscheibe zum Drehen des Oberwagens relativ zum Unterwagen freigeben,
- Drehen des Oberwagens relativ zum Unterwagen mittels einer Antriebseinrichtung, während die Bremsbacken gelöst sind, und
- erneutes Betätigen der Bremsbacken derart, dass der Oberwagen in der gewünschten Drehstellung fixiert wird.

Diese Ausgestaltung bietet sich dann an, wenn relativ selten hohe Drehmomente auf den Oberwagen wirken, so dass die Bremsbacken nicht ohne Grund betätigt und gelöst werden. Hierdurch kann die Anzahl der Betätigungen verringert werden, wodurch die betreffenden Bauteile weniger stark beansprucht werden. Zudem kann die Baumaschine so betrieben werden, als ob keine erfindungsgemäße Fixiereinrichtung vorhanden wäre, wodurch dem Baumaschinenfahrer der gewohnte Bedienkomfort bereitgestellt wird.

Die vorliegende Erfindung wird im Folgenden anhand von bevorzugten Ausführungsbeispielen unter Bezugnahme auf die anhängenden Zeichnungen im Detail erläutert. Es zeigen
Figur 1 eine erfindungsgemäße Baumaschine im zusammengesetzten Zustand,
Figur 2 die in Figur 1 dargestellte Baumaschine anhand einer Explosionszeichnung,
Figur 3a) eine prinzipielle Darstellung einer ersten Ausführungsform einer erfindungsgemäßen Dreh- und Schwenkvorrichtung,
Figur 3b) eine vergrößerte Darstellung des in Figur 3 definierten Ausschnitts b,
Figur 4a) eine prinzipielle Darstellung einer zweiten Ausführungsform der erfindungsgemäßen Dreh- und Schwenkvorrichtung, und
Figur 4b) eine vergrößerte Darstellung des in Figur 4 definierten Ausschnitts b.

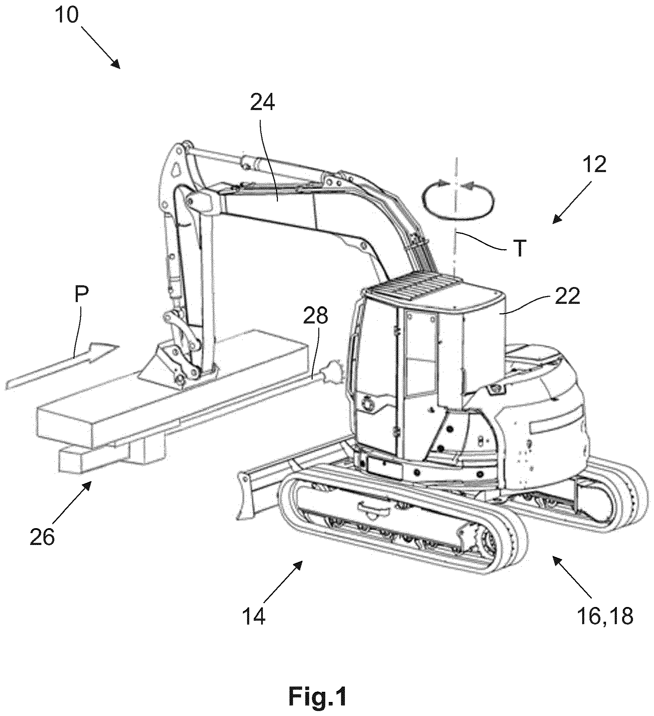

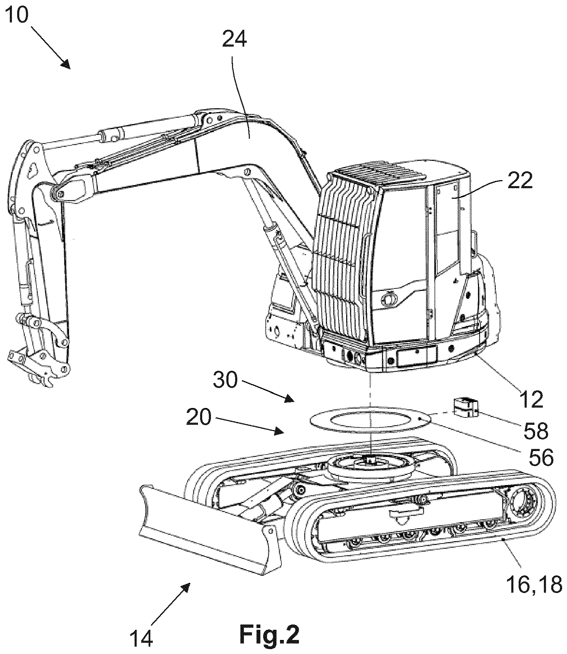

In Figur 1 ist eine erfindungsgemäße Baumaschine 10 anhand einer perspektivischen Darstellung im zusammengesetzten Zustand dargestellt. Die Baumaschine 10 ist in diesem Fall als Bagger ausgestaltet, der einen Oberwagen 12 und einen Unterwagen 14 aufweist. Am Unterwagen 14 ist ein Fahrwerk 16 angeordnet, welches in diesem Fall einen Kettenantrieb 18 aufweist. Der Oberwagen 12 ist über eine hier nicht erkennbare Dreh- und Schwenkvorrichtung 20 (vgl. Figuren 2 bis 4) um eine in etwa senkrecht zur Bodenoberfläche verlaufende Drehachse T drehbar auf dem Unterwagen 14 gelagert und umfasst eine Kabine 22 für den Baggerfahrer sowie einen Ausleger 24, der mehrere um im wesentlichen parallel zur Bodenoberfläche verlaufende Achsen drehbare Abschnitte aufweist. Am freien Ende des Auslegers 24 ist eine Bohrlafette 26 mit einem Bohrer 28 angeordnet. In diesem Fall ist die Bohrlafette 26 so am Ausleger 24 befestigt, dass der Bohrer 28 im Wesentlichen parallel zur Bodenoberfläche und senkrecht zur Haupterstreckungsrichtung des Auslegers 24 verläuft. Folglich können mit der Bohrlafette 26 und dem Bohrer 28 nicht dargestellte Löcher gebohrt werden, die entlang der mit dem Pfeil P gekennzeichneten Richtung verlaufen.

Aus Figur 1 ist gut erkennbar, dass der Bohrer 28 in deutlichem Abstand zur Drehachse T angeordnet ist, so dass beim Bohrvorgang ein Drehmoment auf den Oberwagen 12 wirkt, welches versucht, den Oberwagen 12 gegenüber dem Unterwagen 14 zu drehen. Um einen sicheren Bohrvorgang zu ermöglichen, muss der Unterwagen 14 ein dem Drehmoment entgegengesetztes Haltemoment aufbringen, damit der Oberwagen 12 nicht unkontrolliert dreht. Die Dreh- und Schwenkvorrichtung 20 muss daher so ausgestaltet sein, dass die entsprechenden Drehmomenten sicher vom fest auf der Bodenoberfläche stehenden Unterwagen 14 auf den Oberwagen 12 übertragen werden.

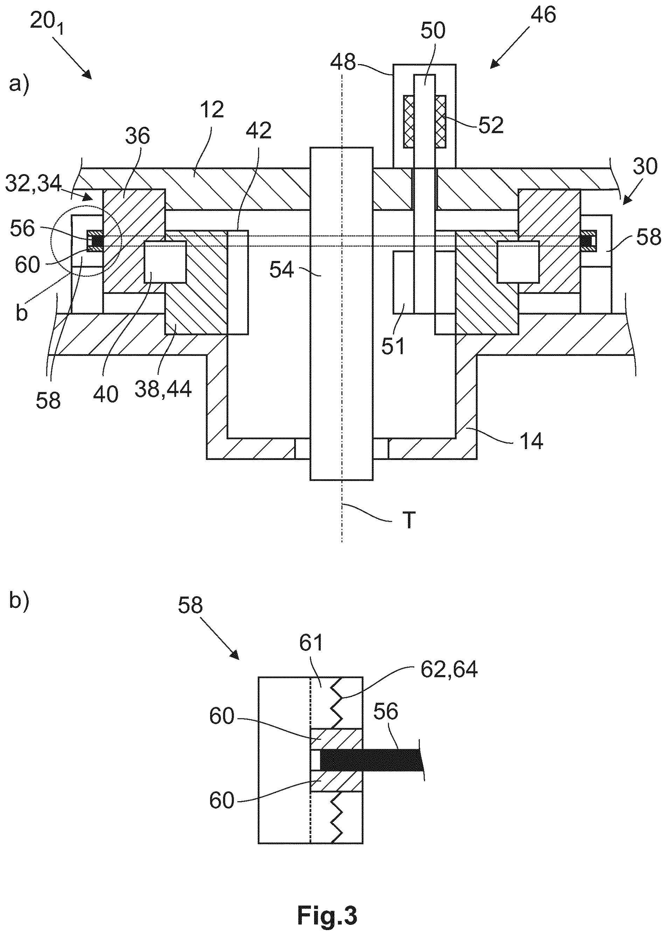

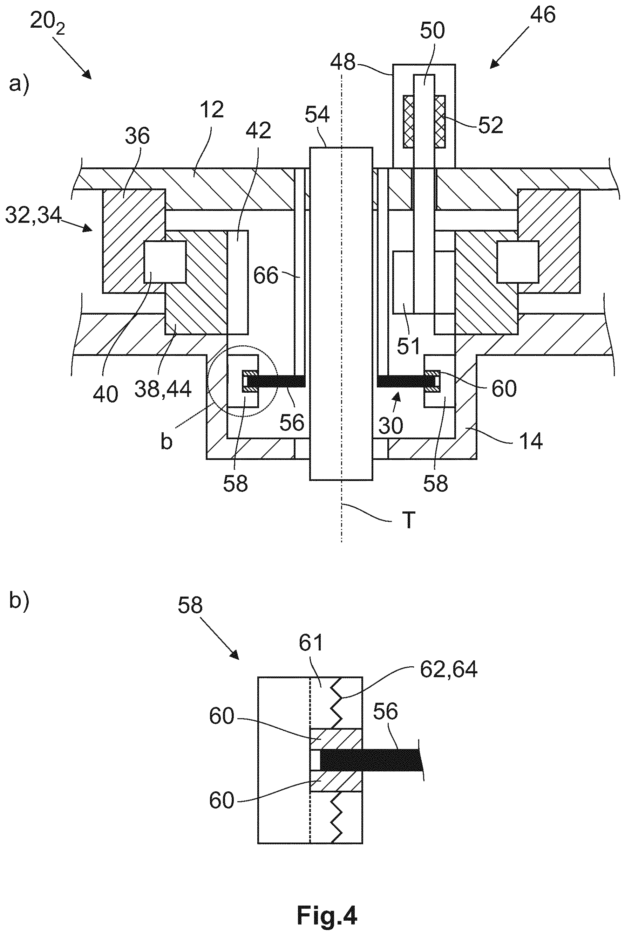

In Figur 2 sind die wesentlichen Teile der in Figur 1 dargestellten Baumaschine 10 anhand einer Explosionszeichnung gezeigt. Man erkennt, dass die Dreh- und Schwenkvorrichtung 20 eine Fixiereinrichtung 30 aufweist, die in den Figuren 3 und 4 anhand einer Prinzipskizze näher dargestellt ist.

Das in Figur 3a) prinzipiell dargestellte erste Ausführungsbeispiel der erfindungsgemäßen Dreh- und Schwenkvorrichtung 20₁ umfasst eine Drehlagerungseinrichtung 32, über die der Oberwagen 12 drehbar im Unterwagen 14 gelagert ist. Im dargestellten Beispiel umfasst die Drehlagerungseinrichtung 32 ein Wälzlager 34 mit einem am Oberwagen 12 befestigten Außenring 36 und einen am Unterwagen 14 befestigten Innenring 38, die eine Anzahl von Wälzkörpern 40 einschließen. Der Innenring 38 weist zudem eine Innenverzahnung 42 auf, so dass der Innenring 38 gleichzeitig auch die Funktion eines Zahnkranzes 44 aufweist.

Ferner weist die Dreh- und Schwenkvorrichtung 20 eine Antriebseinrichtung 46 auf, mit welcher der Oberwagen 12 gegenüber dem Unterwagen 14 gedreht werden kann. Im dargestellten Beispiel umfasst die Antriebseinrichtung 46 einen Antriebsmotor 48, der ein Drehmoment auf eine Welle 50 gibt, die mit einem Ritzel 51 verbunden ist. Das Ritzel 51 wiederum steht im Eingriff mit der Innenverzahnung 42 des Zahnkranzes 44 bzw. des Innenrings 38. Durch Aktivieren des Antriebsmotors 48 wird das Ritzel 51 gedreht. Da der Zahnkranz 44 bzw. der Innenring 38 fest mit dem Unterwagen 14 verbunden ist, bleiben sie bezogen auf den Unterwagen 14 ortsfest, so dass die Drehung des Ritzels 51 ein Abrollen des Ritzels 51 auf dem Zahnkranz 44 bewirkt. Da der Antriebsmotor 48 und die Welle 50 exzentrisch zur Drehachse T angeordnet sind, wird durch das Abrollen des Ritzels 51 ein Drehmoment in den Oberwagen 12 eingeleitet, welches die Drehung des Oberwagens 12 relativ zum Unterwagen 14 bewirkt. Befindet sich der Oberwagen 12 in der gewünschten Drehstellung, so wird eine interne Bremse 52 des Antriebsmotors 48 geschlossen, so dass sich die Welle 50 nicht mehr drehen kann. Hierdurch wird der Oberwagen 12 in seiner Drehstellung gehalten. Die von der internen Bremse 52 aufgebrachte Haltekraft kann aber nur soweit erhöht werden, bis dass die Festigkeitsgrenzen der Verzahnungen des Ritzels 51 und des Zahnkranzes 44 bzw. des Innenrings 38 nicht überschritten werden. Treten bei dem Bohrvorgang sehr hohe Drehmomente auf, so rutscht bei bekannten Dreh- und Schwenkvorrichtungen die interne Bremse 52 durch, so dass sich der Oberwagen 12 gegenüber dem Unterwagen unkontrolliert dreht. Ist die Haltekraft der internen Bremse 52 zu hoch, kann es zu Beschädigungen der Verzahnungen des Ritzels 51 und des Zahnkranzes 44 kommen.

Im dargestellten Beispiel umfasst die erfindungsgemäße Dreh- und Schwenkvorrichtung 20 weiterhin einen zylinderförmigen Durchführungsdom 54, der konzentrisch zur Drehachse T angeordnet ist und zum Durchführen von hier nicht dargestellten Steuerungs- und Versorgungsleitungen vom Unterwagen 14 in den Oberwagen 12 dient. Der Durchführungsdom 54 ist drehfest mit dem Oberwagen 12 verbunden.

Die Fixiereinrichtung 30 der erfindungsgemäßen Dreh- und Schwenkvorrichtung 20 umfasst eine Bremsscheibe 56 und zwei mit der Bremsscheibe 56 zusammenwirkende Bremseinheiten 58, wobei die Bremsscheibe 56 drehfest mit dem Außenring 36 des Wälzlagers 34 verbunden ist. Die Bremseinheiten 58 sind auf nicht näher gezeigte Weise am Unterwagen 14 angeordnet und weisen jeweils zwei Bremsbacken 60 auf, die mit der Bremsscheibe 56 wahlweise zusammenwirken. Eine umgekehrte Anordnung ist genauso gut denkbar.

Wenn die Bremseinheiten 58 betätigt werden, werden die Bremsbacken 60 auf die Bremsscheibe 56 gepresst, so dass es zu einem Reibschluss kommt. Infolgedessen wird neben der internen Bremse 52 ein weiterer Kraftfluss zwischen dem Oberwagen 12 und dem Unterwagen 14 unter Umgehung der Verzahnungen des Ritzels 51 und des Innenrings 38 bereitgestellt. Drehmomente, die infolge des Bohrvorgangs auf den Oberwagen 12 wirken, werden folglich über den Außenring 36, die Bremsscheibe 56 und die Bremseinheiten 58 in den Unterwagen 14 eingeleitet, wodurch der Unterwagen 14 als Reaktion auf das Drehmoment ein entgegengesetzt wirkendes Haltemoment aufbringen und auf den Oberwagen 12 übertragen kann, so dass der Oberwagen 12 in seiner Drehstellung gehalten wird. Die Verzahnungen des Ritzels 51 und des Innenrings 38 werden dabei geschont und nicht beschädigt.

In Figur 3b) ist der in Figur 3a) definierte Ausschnitt b vergrößert dargestellt und zeigt eine der Bremseinheiten 58. Die Bremsbacken 60 sind innerhalb eines Verstellraums 61 hin- und her bewegbar. In der dort gezeigten Ausführungsform weist die Bremseinheit 58 eine Vorspanneinrichtung 62 auf, die eine Anzahl von Federn 64 umfasst. Die Federn 64 drücken die Bremsbacken 60 auf die Bremsscheibe 56, so dass die Bremseinheit 58 im Ausgangszustand betätigt ist und der Oberwagen 12 in der eingenommenen Drehstellung gehalten wird. Soll der Oberwagen 12 nun in eine andere Drehstellung gebracht werden, muss die Bremseinheit 58 aktiv gelöst werden, beispielsweise auf nicht dargestellte mechanische, hydraulische, pneumatische oder elektrische Weise. In diesem Fall ist folglich gewährleistet, dass die Bremseinheit 58 auch dann betätigt und der Oberwagen 12 in seiner Drehstellung fixiert wird, wenn es zu einem Ausfall der Energieversorgung kommt, die zum Antreiben der verwendeten hydraulischen, pneumatischen, elektrischen und/oder mechanischen Systeme benötigt wird.

In Figur 4a) ist ein zweites Ausführungsbeispiel der erfindungsgemäßen Dreh- und Schwenkvorrichtung 20₂ dargestellt, welches weitgehend dem in Figur 3a) dargestellten ersten Ausführungsbeispiel 20₁ gleicht. Einzig die Fixiereinrichtung 30 ist anders aufgebaut und angeordnet. Die Bremsscheibe 56 ist an einem Befestigungsabschnitt 66 angeordnet, der wiederum drehfest mit dem Oberwagen 12 verbunden ist. Der Befestigungsabschnitt 66 ist im dargestellten Ausführungsbeispiel in etwa rohrförmig ausgeführt und konzentrisch zur Drehachse T positioniert, so dass er den Durchführungsdom 54 umschließt. Die Bremseinheiten 58 sind am Unterwagen 14 befestigt. Drehmomente, die infolge des Bohrvorgangs auf den Oberwagen 12 wirken, werden folglich über den Befestigungsabschnitt 66, die Bremsscheibe 56 und die Bremseinheiten 58 in den Unterwagen 14 eingeleitet.

In Figur 4b) ist der in Figur 4a) definierte Ausschnitt b vergrößert dargestellt und zeigt eine der Bremseinheiten 58, die genauso aufgebaut ist wie diejenige, die in Figur 3b) wiedergegeben ist.

### Bezugszeichenliste

- 10: Baumaschine
- 12: Oberwagen
- 14: Unterwagen
- 16: Fahrwerk
- 18: Kettenantrieb
- 20: Dreh- und Schwenkvorrichtung
- 22: Kabine
- 24: Ausleger
- 26: Bohrlafette
- 28: Bohrer
- 30: Fixiereinrichtung
- 32: Drehlagerungseinrichtung
- 34: Wälzlager
- 36: Außenring
- 38: Innenring
- 40: Wälzkörper
- 42: Innenverzahnung
- 44: Zahnkranz
- 46: Antriebseinrichtung
- 48: Antriebsmotor
- 50: Welle
- 51: Ritzel
- 52: interne Bremse
- 54: Durchführungsdom
- 56: Bremsscheibe
- 58: Bremseinheit
- 60: Bremsbacken
- 61: Verstellraum
- 62: Vorspanneinrichtung
- 64: Feder
- 66: Befestigungsabschnitt

- A: Ausschnitt
- P: Pfeil
- T: Drehachse

## Patentansprüche

1. Dreh- und Schwenkvorrichtung für eine Baumaschine (10), mit einem Oberwagen (12) und einem Unterwagen (14), wobei die Dreh- und Schwenkvorrichtung (20) aufweist:
- eine Drehlagerungseinrichtung (32), mit der der Oberwagen (12) auf dem Unterwagen (14) drehbar lagerbar ist,
- eine eine interne Bremse (52) aufweisende Antriebseinrichtung (46), mit welcher der Oberwagen (12) um eine Drehachse (T) relativ zum Unterwagen (14) wahlweise drehbar ist, sowie
- eine Fixiereinrichtung (30), mit welcher der Oberwagen (12) in einer wählbaren Drehstellung relativ zum Unterwagen (14) fixierbar ist,
**dadurch gekennzeichnet, dass** die Fixiereinrichtung (30) eine oder mehrere Bremsscheiben (56) und eine oder mehrere mit der Bremsscheibe (56) zusammenwirkende und wahlweise betätigbare Bremseinheiten (58) umfasst, wobei die Fixiereinrichtung (30) neben der internen Bremse (52) der Antriebseinrichtung (46) einen weiteren Kraftfluss zwischen dem Oberwagen (12) und dem Unterwagen (14) bereitstellt.

2. Dreh- und Schwenkvorrichtung nach Anspruch 1,
**dadurch gekennzeichnet, dass** die Bremsscheibe (56) drehfest mit dem Oberwagen (12) verbindbar und die Bremseinheit (58) fest am Unterwagen (14) anordenbar ist.

3. Dreh- und Schwenkvorrichtung nach Anspruch 1,
**dadurch gekennzeichnet, dass** die Bremsscheibe (56) drehfest mit dem Unterwagen (14) verbindbar und die Bremseinheit (58) fest am Oberwagen (12) anordenbar ist.

4. Dreh- und Schwenkvorrichtung nach einem der Ansprüche 1 bis 3,
**dadurch gekennzeichnet, dass** die Bremseinheit (58) eine Anzahl von Bremsbacken (60) umfasst, die mit einer Vorspanneinrichtung (62) vorspannbar ist, so dass die Bremsbacken (60) zum Fixieren des Oberwagens (12) relativ zum Unterwagen (14) mit der Bremsscheibe (56) zusammenwirken, wobei die Bremsbacken (60) zum Drehen des Oberwagens (12) relativ zum Unterwagen (14) lösbar sind, so dass sie die Bremsscheibe (56) freigeben.

5. Dreh- und Schwenkvorrichtung nach einem der Ansprüche 1 bis 3,
**dadurch gekennzeichnet, dass** die Bremseinheit (58) eine Anzahl von Bremsbacken (60) umfasst, die wahlweise zum Fixieren des Oberwagens (12) relativ zum Unterwagen (14) betätigbar ist, so dass die Bremsbacken (60) mit der Bremsscheibe (56) zusammenwirken.

6. Dreh- und Schwenkvorrichtung nach einem der Ansprüche 4 oder 5,
**dadurch gekennzeichnet, dass** die Bremsbacken (60) hydraulisch, pneumatisch, elektrisch oder mechanisch betätigbar oder lösbar sind.

7. Dreh- und Schwenkvorrichtung nach einem der Ansprüche 1 bis 6,
**dadurch gekennzeichnet, dass** die Dreh- und Schwenkvorrichtung (20) einen konzentrisch um die Drehachse (T) angeordneten Durchführungsdom (54) zum Durchführen von Versorgungs- und Steuerungsleitungen vom Unterwagen (14) zum Oberwagen (12) aufweist, wobei die Bremsscheibe (56) drehfest mit einem den Durchführungsdom (54) zumindest teilweise umschließenden Befestigungsabschnitt (66) verbindbar ist.

8. Dreh- und Schwenkvorrichtung nach einem der Ansprüche 1 bis 7,
**dadurch gekennzeichnet, dass** die Drehlagerungseinrichtung (32) ein Wälzlager (34) mit einem Außenring (36) und einem Innenring (38) umfasst und die Bremsscheibe (56) drehfest mit Außenring (36) oder dem Innenring (38) verbindbar ist.

9. Dreh- und Schwenkvorrichtung nach einem der vorherigen Ansprüche,
**dadurch gekennzeichnet, dass** die Antriebseinrichtung (46) einen Antriebsmotor (48) umfasst, der ein Ritzel (51) wahlweise antreibt, wobei das Ritzel (51) mit einem Zahnkranz zum Drehen des Oberwagens (12) relativ zum Unterwagen (14) zusammenwirkt.

10. Baumaschine (10), insbesondere ein Bagger oder eine Bohrraupe, mit einem Unterwagen (14) und einem Oberwagen (12), umfassend eine Dreh- und Schwenkvorrichtung (20) nach einem der vorherigen Ansprüche zum drehbaren Lagern und zum wahlweisen Drehen des Oberwagens (12) relativ zum Unterwagens sowie zum Fixieren des Oberwagens (12) in einer wählbaren Drehstellung relativ zum Unterwagen (14).

## Claims

1. Rotary and pivoting apparatus for a construction machine (10), having an upper structure (12) and a lower structure (14), wherein the rotating and pivoting apparatus (20) has:
- a rotary bearing device (32), by which the upper structure (12) can be rotatably mounted on the lower structure (14),
- a driving device (46) comprising an internal brake (52), by which the upper structure (12) is selectively rotatable about an axis of rotation (T) relative to the lower structure (14), and
- a fixing device (30), by which the upper structure (12) can be fixed in a selectable rotational position relative to the lower structure (14),
**characterised in that** the fixing device (30) comprises one or more brake discs (56) and one or more brake units (58) which co-operate with the brake disc (56) and can be actuated selectively, wherein the fixing device (30) in addition to the internal brake (52) of the driving device (46) provides a further flux of force between the upper structure (12) and the lower structure (14).

2. Rotary and pivoting apparatus according to claim 1, **characterised in that** the brake disc (56) can be connected to the upper structure (12) for conjoint rotation and the brake unit (58) can be arranged fixedly on the lower structure (14).

3. Rotary and pivoting apparatus according to claim 1, **characterised in that** the brake disc (56) can be connected to the lower structure (14) for conjoint rotation and the brake unit (58) can be arranged fixedly on the upper structure (12).

4. Rotary and pivoting apparatus according to one of claims 1 to 3, **characterised in that** the brake unit (58) comprises a plurality of brake shoes (60) which can be pretensioned by a pretensioning device (62) so that the brake shoes (60) co-operate with the brake disc (56) for fixing the upper structure (12) relative to the lower structure (14), wherein the brake shoes (60) are releasable for rotation of the upper structure (12) relative to the lower structure (14), so that they release the brake disc (56).

5. Rotary and pivoting apparatus according to one of claims 1 to 3, **characterised in that** the brake unit (58) comprises a plurality of brake shoes (60) which can be actuated selectively for fixing the upper structure (12) relative to the lower structure (14), so that the brake shoes (60) co-operate with the brake disc (56).

6. Rotary and pivoting apparatus according to one of claims 4 or 5, **characterised in that** the brake shoes (60) can be actuated or released hydraulically, pneumatically, electrically or mechanically.

7. Rotary and pivoting apparatus according to one of claims 1 to 6, **characterised in that** the rotary and pivoting apparatus (20) has a feedthrough (54) arranged concentrically around the axis of rotation (T) for feeding supply and control lines from the lower structure (14) to the upper structure (12), wherein the brake disc (56) can be connected for conjoint rotation to a fastening portion (66) at least partially surrounding the feedthrough (54).

8. Rotary and pivoting apparatus according to one of claims 1 to 7, **characterised in that** the rotary bearing device (32) comprises an anti-friction bearing (34) having an outer ring (36) and an inner ring (38) and the brake disc (56) can be connected for conjoint rotation to the outer ring (36) or the inner ring (38).

9. Rotary and pivoting apparatus according to one of the preceding claims, **characterised in that** the driving device (46) comprises a drive motor (48) which selectively drives a pinion (51), wherein the pinion co-operates with a ring gear for rotation of the upper structure (12) relative to the lower structure (14).

10. Construction machine (10), in particular an excavator or a drilling crawler, having a lower structure (14) and an upper structure (12), comprising a rotary and pivoting apparatus (20) according to one of the preceding claims for rotatable mounting and for selective rotation of the upper structure (12) relative to the lower structure and also for fixing of the upper structure (12) in a selectable rotational position relative to the lower structure (14).

## Revendications

1. Dispositif de rotation et de pivotement pour un engin de chantier (10) comportant un châssis supérieur (12) et un châssis inférieur (14), le dispositif tournant et pivotant (20) comprenant :
- un dispositif de montage rotatif (32) par lequel le châssis supérieur (12) est monté mobile en rotation sur le châssis inférieur (14),
- un dispositif d'entraînement (46) comprenant un frein interne (52) par lequel le châssis supérieur (12) est sélectivement déplacé en rotation autour d'un axe de rotation (T) par rapport au châssis inférieur (14), ainsi que
- un dispositif de fixation (30) par lequel le châssis supérieur (12) peut être bloqué dans une position de rotation sélective par rapport au châssis inférieur (14),
**caractérisé en ce que**
l'élément de fixation (30) comporte au moins un disque de frein (56) et au moins une unité de frein (58) coopérant avec le disque de frein (56) et pouvant être actionné sélectivement, le dispositif de fixation (30) réalisant un autre flux de force, à côté du frein interne (52) du dispositif d'entraînement (46), entre le châssis supérieur (12) et le châssis inférieur (14).

2. Dispositif rotatif et pivotant conforme à la revendication 1,
**caractérisé en ce que**
le disque de frein (56) est relié solidairement en rotation au châssis supérieur (12) et l'unité de frein (58) est montée solidairement sur le châssis inférieur (14).

3. Dispositif rotatif et pivotant conforme à la revendication 1,
**caractérisé en ce que**
le disque de frein (56) est relié solidairement en rotation au châssis inférieur (14) et l'unité de frein (58) est montée solidairement sur le châssis supérieur (12).

4. Dispositif rotatif et pivotant conforme à l'une des revendications
1 à 3,
**caractérisé en ce que**
l'unité de frein (58) comporte un ensemble de mâchoires de frein (60) précontraintes pour un dispositif de précontrainte (62) de sorte que les mâchoires de serrage (60) coopèrent avec le disque de frein (56) pour bloquer le châssis supérieur (12) par rapport au châssis inférieur (14), les mâchoires de frein (60) pouvant être dégagées par rapport au châssis inférieur (14) pour faire tourner le châssis supérieur (12) par rapport au châssis inférieur (14) de sorte qu'elles libèrent le disque de frein (56).

5. Dispositif rotatif et pivotant conforme à l'une des revendications
1 à 3,
**caractérisé en ce que**
l'unité de frein (58) comporte un ensemble de mâchoires de frein (60) qui sont sélectivement actionnées pour permettre de bloquer le châssis supérieur (12) par rapport au châssis inférieur (14) de sorte que les mâchoires de frein (60) coopèrent avec le disque de frein (56).

6. Dispositif rotatif et pivotant conforme à l'une des revendications
4 à 5,
**caractérisé en ce que**
les mâchoires de frein (60) sont commandées ou dégagées par des moyens hydrauliques, pneumatiques, électriques ou mécaniques.

7. Dispositif rotatif et pivotant conforme à l'une des revendications
1 à 6,
**caractérisé en ce que**
le dispositif rotatif et pivotant (20) comporte un dôme de passage (54) monté concentriquement autour de l'axe de rotation (T) pour permettre le passage de conduites d'alimentation et de commande du châssis inférieur (14) au châssis supérieur (12), le disque de frein (56) étant relié solidairement en rotation à un segment de fixation (66) refermant au moins partiellement le dôme de passage (54).

8. Dispositif rotatif et pivotant conforme à l'une des revendications
1 à 7,
**caractérisé en ce que**
le dispositif de montage rotatif (32) comporte un palier à rouleaux (34) ayant une bague externe (36) et une bague interne (38), et le disque de frein (56) est relié solidairement en rotation avec la bague externe (36) ou la bague interne (38).

9. Dispositif rotatif et pivotant conforme à l'une des revendications précédentes,
**caractérisé en ce que**
le dispositif d'entraînement (46) comporte un moteur d'entraînement (48) qui entraîne sélectivement un pignon (51), coopérant avec une couronne dentée pour faire tourner le châssis supérieur (12) par rapport au châssis inférieur (14).

10. Engin de chantier (10), en particulier excavateur, foreuse sur chenilles comportant un châssis inférieur (14) et un châssis supérieur (12) comprenant un dispositif rotatif et pivotant (20) conforme à l'une des revendications précédentes, pour le montage pivotant et la rotation sélective du châssis supérieur (12) par rapport au châssis inférieur, ainsi que le blocage du châssis supérieur (12) par rapport au châssis inférieur (14) dans la position de rotation sélectionnée.
